(19) Europäisches Patentamt
European Patent Office
Office européen des brevets

(11) Veröffentlichungsnummer: **0 012 269**
**B1**

# (12) EUROPÄISCHE PATENTSCHRIFT

(45) Veröffentlichungstag der Patentschrift: **25.05.83**

(51) Int. Cl.³: **C 08 G 73/10**, C 09 D 3/70, C 09 J 3/16, C 09 K 3/10

(21) Anmeldenummer: **79104731.9**

(22) Anmeldetag: **28.11.79**

(54) **Mit Wasser härtbare Mischungen und ihre Verwendung als Beschichtungs-, Dichtungs- und Verbundmasse.**

(30) Priorität: **11.12.78 DE 2853477**

(43) Veröffentlichungstag der Anmeldung: **25.06.80 Patentblatt 80/13**

(45) Bekanntmachung des Hinweises auf die Patenterteilung: **25.05.83 Patentblatt 83/21**

(84) Benannte Vertragsstaaten: **DE FR GB IT NL SE**

(56) Entgegenhaltungen:
**FR-A-1 574 092**
**FR-A-1 576 862**
**GB-A-1 317 321**
**»Protective Groups in Organic Chemistry« ed J. F. W. McOmie, Plenum Press 1973, S. 66–67**

(73) Patentinhaber: **BAYER AG, Zentralbereich Patente, Marken und Lizenzen, D-5090 Leverkusen 1, Bayerwerk (DE)**

(72) Erfinder: **Wellner, Wolfgang, Dr., Hahnenweg 8, D-5000 Köln 80 (DE)**
Erfinder: **Hajek, Manfred, Dr., Hahnenweg 1, D-5000 Köln 80 (DE)**

**EP 0 012 269 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Mit Wasser härtbare Mischungen und ihre Verwendung als Beschichtungs-, Dichtungs- und Verbundmasse

Gegenstand der vorliegenden Erfindung sind mit Wasser härtbare Mischungen aus reversibel blockierten Polyaminen und Verbindungen, die mindestens zwei cyclische Anhydridgruppen enthalten. Mischungen dieser Art zeichnen sich dadurch aus, daß sie lagerstabil sind, durch Kontakt mit Wasser aktiviert werden und dann rasch bei Raumtemperatur zu Polyamiden weiterreagieren.

Die Umsetzung von Aminen mit cyclischen Anhydriden ist eine sehr rasch verlaufende Reaktion, die meist schon bei Raumtemperatur abläuft und Carbonsäureamide neben freien Carboxylgruppen liefert:

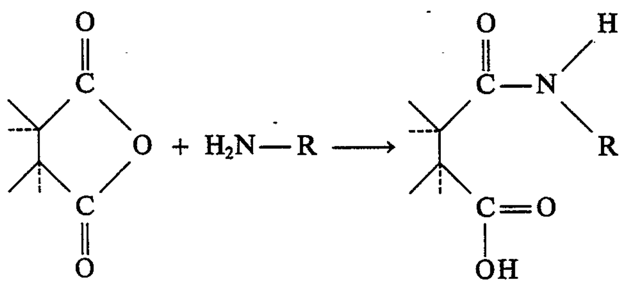

Erst bei höheren Temperaturen erfolgt unter Wasserabspaltung die Bildung des cyclischen Imids.

Der sehr rasche 1. Reaktionsschritt verhindert die Herstellung von Mischungen aus Verbindungen, die Amin- und cyclische Anhydridstrukturen enbeneinander enthalten. Es besteht aber ein Bedarf für lagerstabile Mischungen, dieser Art, wie z. B. bei der Herstellung von Einkomponentensystemen (one-package-system).

Es wurde nun gefunden, daß man lagerstabile Mischungen erhält, wenn man reversibel blockierte Polyamine verwendet. Es hat sich gezeigt, daß Mischungen aus Verbindungen mit cyclischen Anhydridstrukturen und reversibel blockierten Polaminen überraschend gute Lagerstabilität aufweisen, sich aber andererseits durch eine erstaunliche Reaktivität auszeichnen, wenn diesen Mischungen Wasser zugesetzt wird. Der zur Härtung benötigte Wasseranteil kann gegebenenfalls auch gebunden an Füllstoffe eingebracht werden. Eine Umsetzung der erfindungsgemäßen Mischungen findet ebenfalls statt, wenn sie der atmosphärischen Feuchtigkeit ausgesetzt wird. Es bildet sich rasch eine trockene Oberfläche aus und die Härtung erreicht nach und nach die tiefer liegenden Schichten. Die Eigenschaft der entstehenden Polyamide können durch Wahl der reaktiven Verbindung und durch Zusätze in weiten Grenzen verändert werden.

Gegenstand der Erfindung sind feuchtigkeitshärtende Mischungen, die sich dadurch auszeichnen, daß das eingesetzte Polyamin reversibel blockiert ist, d. h. keine reaktionsfähigen NH- oder $NH_2$-Gruppen im Molekül enthält. Die Blockierung der Polyamine wird dadurch erzielt, daß man sie mit Carbonylverbindungen, d. h. Aldehyden oder Ketonen, umsetzt und unter Abspaltung von Wasser in einer Kondensationsreaktion die reaktiven Wasserstoffatome entfernt.

A) Gegenstand der Erfindung sind daher mit Wasser härtbare Mischungen enthaltend blockierte Polyamine enthaltend eine oder mehrere der nachstehend aufgeführten Strukturen:

1. 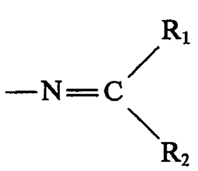 (I)

2. 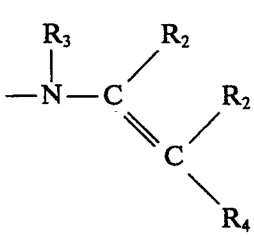 (II)

3. 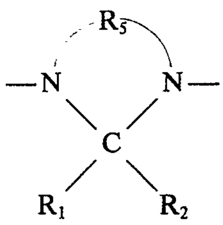 (III)

wobei

$R_1$ bis $R_4$ gleich oder verschieden für H, einen $C_1-C_{10}$-Alkylrest, bevorzugt mit $C_1-C_4$, oder einen $C_4-C_8$-Cycloalkylrest stehen, und
$R_5$ einen $C_2-C_4$-Alkylenrest bedeutet, und

B) wenigstens eine Verbindung mit wenigstens zwei cyclischen Carbonsäureanhydridgruppen.

Die Blockierung der Aminogruppen mit Carbonylverbindungen unter Wasserabspaltung erfolgt nach bekannten Verfahren. Bei der Kondensation von primären Aminogruppen mit Aldehyden oder Ketonen entstehen Aldimine bzw. Ketimine (I).

Bei der gleichen Umsetzung mit sekundären Aminen erhält man Enaminfunktionen (II). Polyamine, bei denen Aminofunktionen z. B. durch 2 oder 3 C-Atome getrennt sind, können sich cyclische Aminalstrukturen (III) ausbilden. Das bei der Reaktion entstehende Wasser wird normalerweise azeotrop entfernt, wobei ein inertes Schleppmittel eingesetzt werden kann, bzw. die Carbonylkomponente selbst diese Funktion übernimmt.

Als Blockierungsmittel für die Polyamine eignen sich bevorzugt z. B. folgende Aldehyde:

Aliphatische Aldehyde wie Formaldehyd, Acetaldehyd, Propionaldehyd, Butyraldehyd, Isobutyraldehyd, Trimethylacetaldehyd, Heptylaldehyd, 3-Formylheptan und Hexahydrobenzaldehyd.

Als geeignete Ketone seien z. B. angeführt:

Aceton, Methyl-ethylketon, Methyl-propyl-keton, Diethyl-keton, Methyl-isopropyl-keton, Methylisobutyl-keton, t-Butyl-methylketon, Diisobutylketon, Cyclopentanon, Cyclohexanon.

Als primäre oder sekundäre Polyamine eignen sich eine Vielzahl von Verbindungen, die wenigstens 2 NH-Funktionen haben, vorzugsweise niedermolekulare aliphatische, bevorzugt mit $C_2-C_{10}$, aliphatisch-aromatische, bevorzugt mit $C_7-C_9$, aromatische, bevorzugt mit $C_6-C_{10}$, cycloaliphatische, bevorzugt mit $C_5-C_{10}$, oder heterocyclische, bevorzugt $C_4-C_6$ und Heteroatome wie N und/oder O und/oder S im Ring, besonders bevorzugt die entsprechenden Diamine. Beispielhaft seien erwähnt: Ethylendiamin, 1,3-Diaminopropan, N,N'-Dimethylethylendiamin, Diethylentriamin, Bis-(2-methylaminoethyl)-amin, Methyl-bis(2-methylaminoethyl)-amin, Triethylentetramin, Tetraethylenpentamin, Pentaethylenhexamin, Propylendiamin, Dipropylentriamin, Tripropylentetramin, 1-Amino-3-methylaminopropan, Bis-(3-aminopropyl)-amin, Bis-(3-aminopropyl)-methylamin, 1,4-Diaminobutan, 1,6-Diaminohexan, 2,5-Trimethyl-hexandiamin, 2,2,4- und 2,4,4-Trimethylhexamethylendiamin, 1,4-Butandiol-bis-(3-aminopropylether), 1,3- und 1,4-Diaminocyclohexan, 4,4'-Diamino-dicyclohexylmethan, 1,3- und 1,4-Xylylendiamin, Isophorondiamin, 1,3- und 1,4-Diaminobenzol.

Es können auch höhermolekulare Polyamine vorzugsweise mit Molekulargewichten von 1000 bis 6000 Verwendung finden, wie sie z. B. Umsetzung von Polyetherpolyolen vorzugsweise mit Molekulargewichten von 500 bis 6000 mit Ammoniak und Wasserstoff unter Druck in Gegenwart von geeigneten Katalysatoren entstehen, oder durch Umsetzung von Nitrogruppen enthaltenden organischen Isocyanaten vorzugsweise p-Nitrophenylisocyanat mit Polyetherpolyolen und anschließender Reduktion entstehen. Eine weitere Variante besteht in der Umsetzung von Präpolymeren mit Isocyanatendgruppen mit bereits blockierten Aminen, die noch eine gegenüber Isocyanat reaktionsfähige Gruppe, z. B. OH oder NH enthalten.

Besonders eignen sich sterisch gehinderte Polyamine und/oder sterisch gehinderte Carbonylverbindungen. Ebenso können durch Michael-Addition modifizierte Polyald- oder Polyketimine Verwendung finden.

Als Polyanhydride können beliebige Verbindungen, die zwei oder mehrere cyclische Anhydridstrukturen im Molekül enthalten, eingesetzt werden.

So ist es möglich, niedermolekulare polyfunktionelle cyclische Anhydride zu verwenden.

Besonders bevorzugt werden aromatische, polyfunktionelle, vorzugsweise cyclische Dianhydride, und von diesen Pyromellitsäuredianhydrid und Benzophenon-3,4,3',4'-tetracarbonsäureanhydrid eingesetzt. Sie können insbesondere in gelöster Form in geeigneten Lösungsmitteln eingesetzt werden.

Ganz besonders bevorzugt werden höhermolekulare Verbindungen mit wenigstens 2 cyclischen Anhydridgruppierungen, vorzugsweise solche mit Molekulargewichten von 1000 bis 10 000 verwendet.

Diese Polyanhydride können durch Umsetzung von monoungesättigten Verbindungen mit wenigstens einer cyclischen Anhydridgruppierung im Molekül und $\alpha$-Olefinen oder mehrfach

ungesättigten Verbindungen nach bekannten Polymerisationsverfahren hergestellt werden.

Als $\alpha$-Olefine kommen in Frage:

Ethylen, 1-Octen, 1-Decen, Styrol, Vinylchlorid, Vinylacetat, Vinylether, Derivate der Acryl- und Methacrylsäure wie Ester und Nitrile.

Als mehrfach ungesättigte Verbindungen kommen in Frage:

Oligomere des Butadiens, mehrfach ungesättigte Fettsäurederivate wie z. B. Holzöl.

Als ungesättigte cyclische Anhydridverbindungen können vorzugsweise Verbindungen der allgemeinen Formel

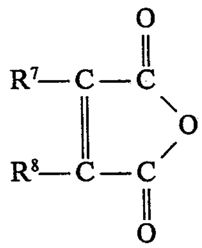

(VII)

verwendet werden, in der

$R^7$ und $R^8$ gleich oder verschieden, für Wasserstoff oder einen Alkylrest mit $C_1-C_4$ stehen. Vorzugsweise wird Maleinsäureanhydrid verwendet.

Die höhermolekularen Polyanhydride können auch durch Umsetzung von cyclischen Dianhydriden bei Temperaturen über 100°C mit Polyolen auf Polyether- oder Polyesterbasis im Verhältnis OH/Anhydridgruppen von 1 : 2 hergestellt werden.

Für diese Variante des Verfahrens eignen sich Pyromellitsäuredianhydrid und Benzophenon-3,4,3',4'-tetracarbonsäureanhydrid besonders.

Als Polyolkomponenten für diese Verfahrensmöglichkeit eignen sich handelsübliche Polyether und Polyester mit primären und/oder sekundären Hydroxylgruppen im Molgewichtsbereich von 500 bis 6000.

Die erfindungsgemäßen Mischungen werden durch Abmischen der Komponenten A und B, die gegebenenfalls in geeigneten Lösungsmitteln gelöst sind, hergestellt.

Die erfindungsgemäßen Mischungen reagieren bei Kontakt mit Wasser schnell, wobei offenbar das Amin selbst sehr rasch mit den cyclischen Anhydridfunktionen zu einem Polykondensat reagiert.

Bei den erfindungsgemäß beanspruchten Mischungen kann das Verhältnis der beiden Reaktionspartner in weiten Grenzen variiert werden und reicht von 0,6 bis 1,5 Äquivalent Anhydridgruppe auf 1 Äquivalent des Amins.

Die Reaktion selbst kann durch Wärme und/oder Katalysatoren beschleunigt werden. Als Katalysatoren eignen sich anorganische und organische Säuren, so z. B. aliphatische und aromatische Monocarbonsäuren, wie Essigsäure, Dodecancarbonsäure, Phenylessigsäure, Benzoesäure, aber auch Verbindungen, die den Carboxylrest mehrfach im Molekül enthalten, wie z. B. Oxalsäure, Bernsteinsäure, Polyacrylsäure und saure Austauscherharze.

Die erfindungsgemäßen Mischungen können neben den Reaktionspartnern noch inerte Komponenten enthalten. So kann man z. B. durch Lösungsmittel- und/oder Weichmacherzusätze die für bestimmte Anwendungen geforderten Eigenschaften einstellen. Weiter können Füllstoffe organischer und anorganischer Natur zugesetzt werden. Durch Zugabe von Pigmenten, Alterungsschutzmitteln und dergleichen können die Massen für die verschiedenen Anwendungsmöglichkeiten optimiert werden.

Die erfindungsgemäßen Mischungen können zur Herstellung von Filmen, Anstrichstoffen, Beschichtungen, Dichtungsmassen, Imprägniermitteln, Fasern und Klebstoffen verwendet werden. Überzüge oder Filme lassen sich aus den erfindungsgemäßen Mischungen mit oder ohne Lösungsmittel permanent oder wieder ablösbar auf ein geeignetes Substrat, wie Metall, Glas, Holz, Kunststoff, Papier oder Leder, gegebenenfalls unter Mitverwendung von Haftmitteln, wie z. B. Silanen, auftragen.

Übersicht der in den Beispielen verwendeten blockierten Polyamine und Polyanhydride.

Blockierte Polyamine

a) 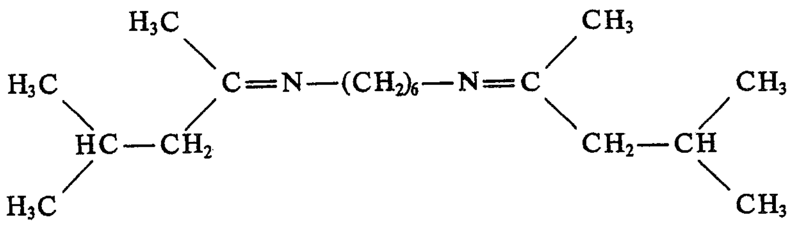

b) 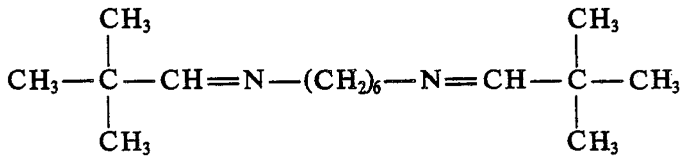

c) 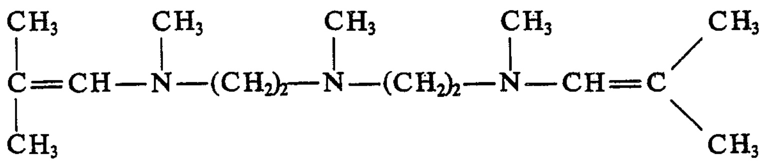

d) 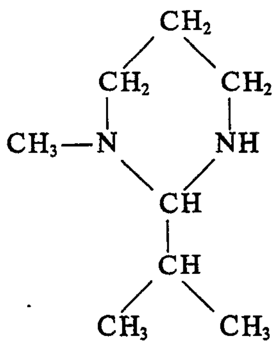

Polyanhydride

Präpolymere, die cyclische Dicarbonsäureanhydrid-Gruppen tragen.

E Umsetzungsprodukte, die durch Erhitzen von oligomerem Butadien und Maleinsäureanhydrid (1 : 1) in Isomerisierungs- und Additionsreaktionen entstehen. Viskosität eines solchen eingesetzten Reaktionsproduktes ca. 5300 mPa · s.

F Additionsprodukt, das nach 2stündigem Erwärmen auf ca. 90° C aus 890 g Holzöl und 238 g Maleinsäureanhydrid erhalten wurde. Bei der exotherm verlaufenden Reaktion darf eine Temperaturspitze von 120° C nicht überschritten werden. Viskosität des verwendeten Reaktionsproduktes ca. 43 500 mPa · s.

G Präpolymer mit Anhydridendgruppen aus der Umsetzung von 500 g eines linearen Polypropylenglykols mit Molekulargewicht ca. 2000 und 109 g Pyromellitsäuredianhydrid. Nach Erwärmen auf 120° C bis 130° C setzte eine exotherme Reaktion ein und die Temperatur stieg auf ca. 145° C an. Das Gemisch wurde weitere 12 Stunden auf 150 – 155° C erwärmt und dann weiter verwendet.

H Präpolymer mit Anhydridendgruppen aus der Umsetzung von 800 g eines auf Trimethylolpropan gestartetem Polyethers auf Propylen- und Ethylenoxidbasis mit einem mittleren Molgewicht von ca. 4800 und ca. 70 – 80% primären OH-Gruppen und 109 g Pyromellitsäuredianhydrid. Unter kräftigem Rühren wurde auf ca. 125° C erwärmt, wobei unter exothermer Reaktion die Temperatur auf ca. 150° C anstieg. Nach Abklingen der Reaktion wurde die Temperatur noch weitere 8 Stunden auf 150 bis 155° C gehalten. Anschließend wurden ungelöste Bestandteile durch Absaugen entfernt und das flüssige Präpolymer für weitere Versuche verwendet.

## Beispiel 1

In absolutem Dimethylformamid werden zu 0,1 Mol einer 20%igen Lösung von Benzophenon-3,4,3',4'-tetracarbonsäuredianhydrid 0,1 Mol des Ketimins abgegeben. Die Mischung ist unter Ausschluß von Luftfeuchtigkeit einige Stunden lagerstabil; Aufstriche der Lösung bilden bei Kontakt mit Luftfeuchtigkeit bei Raumtemperatur nach wenigen Stunden klare und trockene Filme. Nach

15minütigem Einbrennen bei 200° C zeichnen sich die Filme durch sehr gute Lösungsmittelbeständigkeit aus.

Filmhärte: 217 sec Pendelhärte (n. König) DIN 53 157

### Beispiele 2–8

Entsprechend der Zusammensetzung nach Tabelle I wurden die flüssigen Komponenten aus Polyanhydrid und blockiertem Polyamin gemischt und anschließend geprüft.

Tabelle I

| Beispiel | Gew.-Teile | Polyanhydrid | Gew.-Teile | Polyamin | Lagerstabilität bei Raumtemperatur d = Tage | Hautbildung bei 50% rel. Feuchte nach | Pendelhärte Sek./Schichtdicke | Shore-Härte |
|---|---|---|---|---|---|---|---|---|
| 2 | 100 | F | 5,8 | a | 1 d | ca. 50 Min. | 55/ 48 µm | |
| 3 | 100 | E | 5,3 | b | 60 d | sofort | 33/ 38 µm | |
| 4 | 100 | E | 3 | d | 1 d | sofort | 21/ 148 µm | |
| 5 | 100 | F | 30 | a | 1 d | sofort | 67/ 52 µm | Shore A 55 |
| 6 | 100 | F | 27 | b | 60 d | ca. 50 Min. | 104/ 32 µm | Shore A 33 |
| 7 | 100 | F | 28 | c | 14 d | sofort | | |
| 8 | 100 | F | 15 | d | 1 d | sofort | 76/205 µm | Shore D 50 |

### Beispiel 9

100,0 g des Produktes F und
30,0 g des Ketimins a werden vermischt.

Die Mischung ist bei Raumtemperatur bei Ausschluß von Feuchtigkeit ca. 8 Stunden lang verarbeitungsfähig. Bei Kontakt mit Luftfeuchtigkeit bildet sich in wenigen Sekunden eine Haut an der Oberfläche. Die Schichtstoffe, Shore A-Härte ca. 50, zeichnen sich durch eine sehr geringe Wasserdampfdurchlässigkeit aus. Wasserdampfdurchgang (Gefälle 93/0):

$6 \cdot 10^{-4}$ g/Tag · $cm^2$ bei 1 mm Schichtstärke.

### Beispiel 10

100,0 g des Produktes F,
10,0 g Titandioxid,
0,2 g Ruß,
5,0 g Xylol,
1,0 g Zeolith-Pulver (Molekularsieb) und
27,0 g des Produktes b werden zu einer gebrauchsfertigen Beschichtungsmasse vermischt.

Die Mischung ist bei Raumtemperatur unter Ausschluß von Feuchtigkeit mindestens 6 Monate lagerfähig. Bei Kontakt mit Luftfeuchtigkeit (50% und 20° C) bildet sich nach 1 Stunde eine Haut an der Oberfläche. Shore A-Härte = 35.

### Beispiel 11

100,0 g des Produktes E,
50,0 g Trioctylphosphat,
10,0 g hydriertes Ricinusöl (Verdickungsmittel),

400,0 g Kreidepulver,
10,0 g Zeolith-Pulver (Molekularsieb),
2,0 g Ruß,
2,0 g Ölsäure und
5,3 g des Produktes b werden zu einer gebrauchsfertigen Dichtungsmasse vermischt.

Die Dichtungsmasse ist bei Raumtemperatur unter Ausschluß von Feuchtigkeit mindestens 6 Monate lagerfähig und zeigt bei Oberflächenkontakt mit Luftfeuchtigkeit (50% und 20°C) nach 1 Stunde eine Hautbildung.

Beispiel 12

Einfluß des Molverhältnisses auf die Eigenschaften des Beschichtungsmaterials.

| Zusammensetzung und Eigenschaften | | | |
|---|---|---|---|
| Polyanhydrid | 100 g | 100 g | 100 g |
| Methyläthylketon | 30 g | 30 g | 30 g |
| Ketimin a) | 11,5 g | 23 g | 34,5 g |
| Äquivalenzverhältnis $NH_2$/Anhydrid | 1 : 1 | 2 : 1 | 3 : 1 |
| Filmoberfläche | klebend | trocken | trocken |
| Shore A | – | 76 | 70 |

Die so hergestellten Mischungen sind mehrere Stunden (4 bis 16 Stunden) unter Ausschluß von Feuchtigkeit verarbeitbar und bilden bei Kontakt mit z. B. Luftfeuchtigkeit sehr rasch (ca. 30 sec) eine Haut aus.

Beispiel 13

Eine Zweikomponenten-Verbundmasse mit langer Topfzeit wird durch Mischen von

100 g Polyanhydrid H
30 g Methylethylketon und
5 g Produkt b

hergestellt.

Unter Ausschluß von Feuchtigkeit ist diese Mischung bei 25°C ca. 14 Tage lagerfähig. Bei Zutritt von Luftfeuchtigkeit bildet innerhalb von 30 Min. eine Haut aus.

**Patentansprüche**

1. Mit Wasser härtbare Mischungen enthaltend

A) blockierte Polyamine enthaltend eine oder mehrere der nachstehend aufgeführten Strukturen:

1. 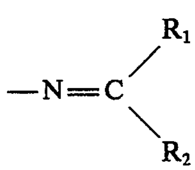 (I)

2. 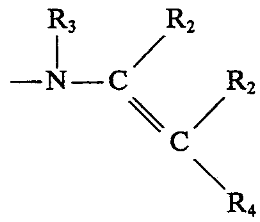 (II)

3. 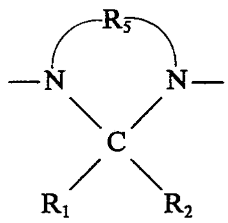 (III)

wobei

$R_1$ bis $R_4$ gleich oder verschieden für H, einen $C_1-C_{10}$-Alkylrest, oder einen $C_4-C_8$-Cycloalkylrest stehen und

$R_5$ einen $C_2-C_4$-Alkylenrest bedeutet und

B) wenigstens eine Verbindung mit wenigstens zwei cyclischen Carbonsäureanhydridgruppen.

2. Mischungen nach Anspruch 1, dadurch gekennzeichnet, daß das Polyamin ein Molgewicht von 60 bis 6000 hat.

3. Mischungen nach Ansprüchen 1 und 2, dadurch gekennzeichnet, daß die Komponente B) ein Molgewicht von 218 bis 10 000 aufweist.

4. Mischungen nach Ansprüchen 1–3, dadurch gekennzeichnet, daß die Komponente B) das Umsetzungsprodukt von Polyolen mit cyclischen Dianhydriden bei einem OH/Anhydridgruppen-Verhältnis von 1 : 2 ist.

5. Mischungen nach Ansprüchen 1 bis 3, dadurch gekennzeichnet, daß die Komponente B) durch Copolymerisation eines mono-ungesättigten cyclischen Anhydrids mit mehrfach ungesättigten Verbindungen oder $\alpha$-Olefinen hergestellt ist.

6. Verwendung der Mischungen gemäß Ansprüchen 1–5 zum Beschichten von Substraten.

7. Verwendung der Mischungen gemäß Ansprüchen 1–5 als Dichtungsmassen.

8. Verwendung der Mischungen gemäß Ansprüchen 1–5 zum kraftschlüssigen Verbund getrennter Materialien.

**Claims**

1. Water-hardenable mixtures containing

A) blockes polyamines containing one or more of the structures indicated below:

1. 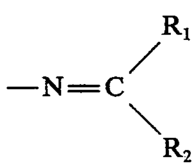 (I)

2. 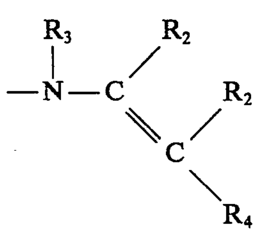 (II)

3. 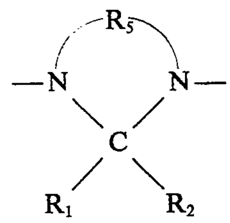 (III)

wherein

$R_1$ to $R_4$ are identical or different and represent H, a $C_1-C_{10}$-alkyl radical or a $C_4-C_8$-cycloalkyl radical and

$R_5$ denotes a $C_2-C_4$-alkylene radical and

B) at least one compound containing at least two cyclic carboxylic acid anhydride groups.

2. Mixtures according to claim 1, characterized in that the polyamine has a molecular weight of 60 to 6000.

3. Mixtures according to claims 1 and 2, characterized in that the component B) has a molecular weight of 218 to 10 000.

4. Mixtures according to claims 1–3, characterized in that component B) is the reaction product of polyols with cyclic dianhydrides in an OH/anhydride group ratio of 1 : 2.

5. Mixtures according to claims 1 to 3, characterized in that component B) is prepared by the copolymerisation of a mono-unsaturated cyclic anhydride with polyunsaturated compounds or -olefins.

6. Use of the mixtures according to claims 1–5 for coating substrates.

7. Use of the mixtures according to claims 1–5 as sealing compositions.

8. Use of the mixtures according to claims 1–5 for firmly bonding separate materials.

**Revendications**

1. Mélanges durcissables par l'eau contenant

A) des polyamines bloquées qui contiennent une ou plusieurs des structures suivantes

1. 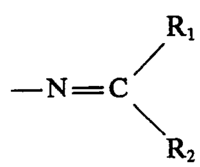 (I)

2. 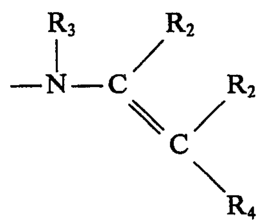 (II)

3. 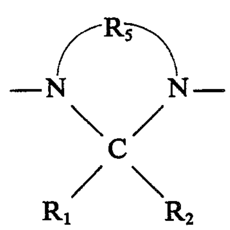 (III)

dans lesquelles

$R_1$ à $R_4$, ayant des significations identiques ou différentes, représentent H, un groupe alkyle en $C_1-C_{10}$ ou un groupe cycloalkyle en $C_4-C_8$ et

$R_5$ représente un groupe alkylène en $C_2-C_4$ et

B) au moins un composé portant au moins deux groupes anhydride d'acide carboxylique cyclique.

2. Mélanges selon la revendication 1, caractérisés en ce que la polyamine a un poids moléculaire de 60 à 6000.

3. Mélanges selon les revendications 1 et 2, caractérisés en ce que le composant B) a un poids moléculaire de 218 à 10 000.

4. Mélanges selon les revendications 1 à 3, caractérisés en ce que le composant B) est le produit de réaction de polyols avec des dianhydrides cycliques à un rapport de 1 : 2 entre les groupes OH et les groupes anhydride.

5. Mélanges selon les revendications 1 à 3, caractérisés en ce que le composant B) est préparé par copolymérisation d'un anhydride cyclique mono-insaturé avec des composés polyinsaturés ou des α-oléfines.

6. Utilisation des mélanges selon les revendications 1 à 5, pour le revêtement de supports.

7. Utilisation des mélanges selon les revendications 1 à 5, en tant que masses d'étanchéité.

8. Utilisation des mélanges selon les revendications 1 à 5 pour le collage sous l'action d'une force de matériaux séparés.